# EUROPEAN PATENT SPECIFICATION

(11) **EP 2 465 734 B1**
(45) Date of publication and mention of the grant of the patent: **21.02.2018**
(21) Application number: 10195373.5
(22) Date of filing: 16.12.2010
(51) Int. Cl.: B60R 16/03

(54) **Arrangement and method for voltage protection of an electrical load in a motor vehicle**
Anordnung und Verfahren zum Spannungsschutz einer elektrischen Last in einem Motorfahrzeug
Agencement et procédé de protection de la tension d'une charge électrique dans un véhicule à moteur

(43) Date of publication of application: 20.06.2012
(73) Proprietor: Volvo Car Corporation, 40 531 Göteborg (SE)
(72) Inventor: Wessberg, Christer, 43351 Partille (SE)
(74) Representative: Volvo Car Corporation

(56) References cited:
- EP-A2- 2 179 896
- WO-A1-2010/142712
- DE-A1- 10 160 266
- FR-A1- 2 687 511
- US-A1- 2007 152 641

## Description

### Technical field

The present invention relates to a method for voltage protection of an electrical load in a motor vehicle in accordance with the preamble of claim 1.

The present invention also relates to an arrangement for voltage protection of an electrical load in a motor vehicle in accordance with the preamble of claim 6.

### Background of the invention

Electrical systems are frequently used in motor vehicles to sustain onboard systems comprising electrical consumers or loads. Some of these loads are sensitive for a low or decreased voltage. Historically, lots of design work has been invested in technical solutions in order to secure a required voltage level to these loads. This has often resulted in expensive and heavy cable harnesses and/or limitations in vehicle battery life. Further, in electrical distribution systems of the kind used in vehicles, all involved components will have tolerances which normally will have to be added when dimensioning such systems. The sum of all such tolerances often leads to a limited allowed window for operation.

US 2007152641 discloses a voltage generator device for a motor vehicle that prevents occurrence of a problem regarding an electric load by maintaining a voltage raising operation as much as possible. The voltage generator device includes a voltage generating portion that receives an input voltage and generates a target voltage, an observing portion that observes an operating condition of the voltage generating portion, and a control portion.

The above cited prior art document proposes a voltage raising device that provisionally maintains an operation and function when there is an abnormality provided. If a battery voltage drops, e.g. when an engine is restarted after an idle stop, the voltage raising device raises the output voltage to a target voltage by using a voltage detecting circuit and a current detecting circuit. If an overcurrent determining circuit detects overcurrent, a switching control circuit reduces the target voltage to perform a control. If overvoltage is output, for example, due to an increased target voltage caused by an internal setting deviation resulting from a failure, an overvoltage detecting circuit outputs a prohibition signal to stop the switching operation. However, as long as the output voltage is not overvoltage, the voltage raising operation is allowed.

### Summary of the invention

One object of the invention is to provide an improved method for voltage protection of an electrical load in a motor vehicle.

This object is achieved by the method as claimed in claim 1.

Thanks to the provision of the steps of: arranging a DC/DC converter to receive as a control signal the voltage level on an electrical load to be protected and arranging the DC/DC converter in a feed line to the electrical load to be protected in parallel with a diode such that a battery voltage of the vehicle is feed to an input of the DC/DC converter and to the anode of the diode and such that the electrical load to be protected is fed from the output of the DC/DC converter and the cathode side of the diode, is provided for reliable and secure voltage protection where no consideration of intermediate components has to be made.

A further object of the invention is to provide an improved arrangement for voltage protection of an electrical load in a motor vehicle.

This object is achieved by the system as claimed in claim 6.

Thanks to the provision of a DC/DC converter arranged to receive as a control signal the voltage level on an electrical load to be protected where the DC/DC converter is arranged in a feed line to the electrical load to be protected in parallel with a diode such that a battery voltage of the vehicle is feed to an input of the DC/DC converter and to the anode of the diode and such that the electrical load to be protected is fed from the output of the DC/DC converter and the cathode side of the diode, is provided for reliable and secure voltage protection without consideration of intermediate components.

Preferred embodiments are listed in the dependent claims.

### Description of drawings

In the following, the invention will be described in greater detail by way of example only with reference to attached drawings, in which
Fig. 1 is a block diagram schematically illustrating the arrangement for voltage protection of an electrical load in a motor vehicle according to a first embodiment of the present invention; and
Fig. 2 is a block diagram schematically illustrating the arrangement for voltage protection of an electrical load in a motor vehicle according to a second alternative embodiment of the present invention; and
Fig. 3 is a block diagram schematically illustrating the arrangement for voltage protection of an electrical load in a motor vehicle according to a third embodiment of the present invention; and
Fig. 4 is a block diagram schematically illustrating the arrangement for voltage protection of an electrical load in a motor vehicle according to a fourth embodiment of the present invention.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of embodiments

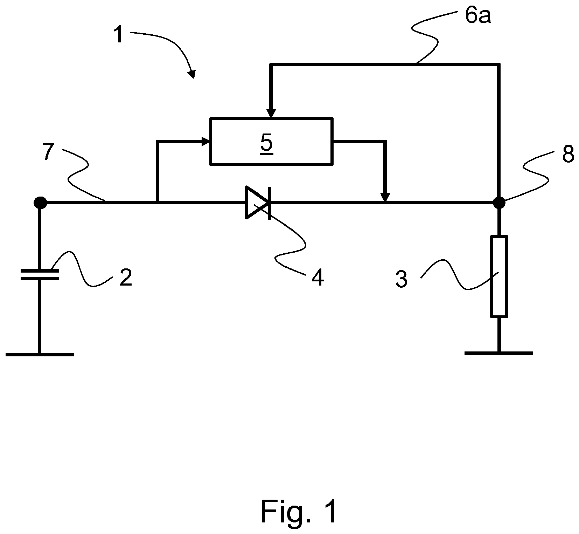

In overview, the present invention relates to a method and an arrangement 1, as illustrated in figures 1 through 4.

The method and arrangement 1 are provided herein to improve voltage protection of an electrical load 3 in a motor vehicle.

The invention is based on the realization that, in principle, it should be possible to use a DC/DC converter 5 in order to achieve the objects of the present invention. However DC/DC converters are prone to suffering energy losses, which would give a negative impact to the total current consumption of a vehicle, and hence also for the fuel consumption of an associated vehicle, e.g. if powered by an internal combustion engine. Thus, the invention is further based on the realization that a DC/DC converter 5 may be used in combination with a control circuit and a diode 4 in order to remedy such deficiencies.

In accordance with the present invention the voltage level on a sensitive load 3 is fed back to the DC/DC converter 5, which continuously compensates for voltage loss independent of current. Using such a setup it becomes possible to delete all tolerances in the system whilst the voltage is guaranteed by the DC/DC converter 5 and the control loop. This inventive setup of measuring the voltage level used for controlling the DC/DC converter 5 directly on the load 3 to be protected thus provides an advantage as compared to prior art arrangements where consideration of intermediate component losses normally will have to be made.

In figure 1 is shown a block diagram schematically illustrating the arrangement for voltage protection of an electrical load 3 in a motor vehicle according to a first embodiment of the present invention.

The arrangement for voltage protection of an electrical load 3 in a motor vehicle according to this first embodiment comprises a DC/DC converter 5. The DC/DC converter 5 is arranged to receive as a control signal the voltage level on an electrical load 3 to be protected. The voltage level on the electrical load 3 to be protected is measured in a point 8 immediately adjacent to the electrical load 3 to be protected. The control signal is fed to the DC/DC converter 5 using a dedicated wire 6a provided for sensing the voltage at the sensitive load 3. Through controlling the DC/DC converter 5 continuously based on the actual voltage level on the electrical load 3 to be protected, no consideration has to be made for losses in the feed line 7 and any intermediate components between the DC/DC converter 5 and the electrical load 3 to be protected. This in turn enables a less limited allowed window for operation.

The DC/DC converter 5 is arranged in a feed line 7 to the electrical load 3 to be protected in parallel with a diode 4. A battery 2 voltage of the vehicle is feed to an input of the DC/DC converter 5 and to the anode of the diode 4. The electrical load 3 to be protected is fed from the output of DC/DC converter 5 and the cathode side of the diode 4.

The diode 4 is provided as it is undesirable that more current than necessary passes through the DC/DC converter 5. Further, the diode 4 also serves to protect the DC/DC converter 5 against short circuits. Still further, the diode 4 provides for ensuring power supply should the DC/DC converter 5 cease to operate properly or fail. Thus, the diode 4 ensures that electrical power may reach critical components 3 irrespective of malfunctions in the operation of the associated DC/DC converter 5.

Having the above objectives in mind the person skilled in the art should have no problem in selecting an appropriate diode 4 for each specific implementation of the present invention.

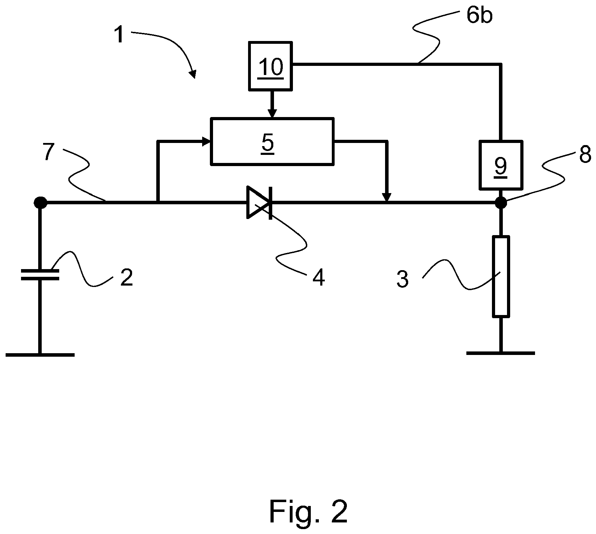

In figure 2 is shown a block diagram schematically illustrating the arrangement for voltage protection of an electrical load 3 in a motor vehicle according to a second alternative embodiment of the present invention.

The figure 2 embodiment corresponds essentially to the figure 1 embodiment, although instead of providing a dedicated wire 6a for sensing the voltage at the sensitive load 3 there is provided a dedicated voltage sensing arrangement 9 for sensing the voltage at the sensitive load 3. As for the figure one embodiment the voltage level on the electrical load 3 to be protected is measured in a point 8 immediately adjacent to the electrical load 3 to be protected. It is here further assumed that the vehicle is provided with a means or network 6b for transferring information between vehicle systems, such as a controller-area network bus or similar.

A controller-area network (CAN or CAN-bus) is a vehicle bus standard designed to allow microcontrollers and devices to communicate with each other within a vehicle without a host computer.

The dedicated voltage sensing arrangement 9 is arranged to sense the voltage at the sensitive load 3. The thus sensed voltage at the sensitive load 3 is then transmitted, e.g. via the vehicle CAN-bus or similar 6b, to a dedicated feedback input arrangement 10. This dedicated feedback input arrangement 10 is arranged to provide the sensitive load 3 voltage as a feedback input to the DC/DC converter 5.

As for the figure 1 embodiment, through controlling the DC/DC converter 5 continuously based on the actual voltage level on the electrical load 3 to be protected, no consideration has to be made for losses in the feed line 7 and any intermediate components between the DC/DC converter 5 and the electrical load 3 to be protected. This in turn enables a less limited allowed window for operation.

As for the figure 1 embodiment, the DC/DC converter 5 is arranged in a feed line 7 to the electrical load 3 to be protected in parallel with a diode 4. A battery 2 voltage of the vehicle is feed to an input of the DC/DC converter 5 and to the anode of the diode 4. The electrical load 3 to be protected is fed from the output of DC/DC converter 5 and the cathode side of the diode 4.

The diode 4 is, as for the figure 1 embodiment, provided as it is undesirable that more current than necessary passes through the DC/DC converter 5. Further, the diode 4 also serves to protect the DC/DC converter 5 against short circuits. Still further, the diode 4 provides for ensuring power supply should the DC/DC converter 5 cease to operate properly or fail. Thus, the diode 4 ensures that electrical power may reach critical components irrespective of malfunctions in the operation of the associated DC/DC converter 5.

As for the figure 1 embodiment, having the above objectives in mind the person skilled in the art should have no problem in selecting an appropriate diode 4 for each specific implementation of the present invention.

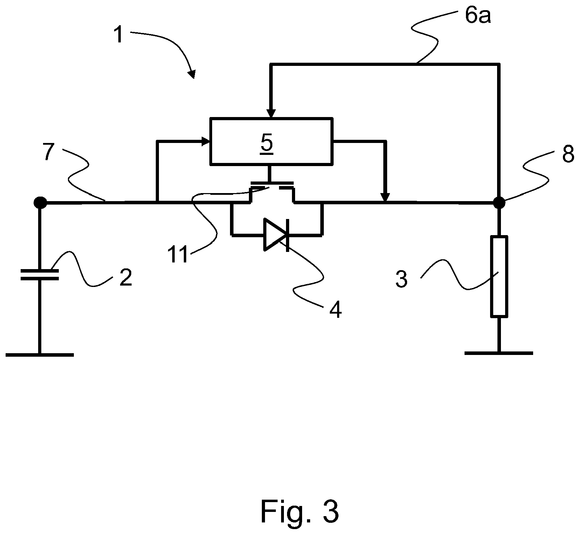

In figure 3 is shown a block diagram schematically illustrating the arrangement for voltage protection of an electrical load 3 in a motor vehicle according to a third alternative embodiment of the present invention.

The figure 3 embodiment corresponds essentially to the figure 1 embodiment, although even if the diode 4 is provided in order to prevent current from travelling backwards, diodes, unfortunately, are not ideal, why losses will occur due to the resistance of the diode 4. Thus, in order to avoid such losses it is possible, as provided for in the figure 3 embodiment, to make use of a field-effect-transistor (FET) 11 and control it to have similar characteristics to a diode, i.e. only allowing current to travel in one direction. Such an arrangement promotes the reduction of losses further as the DC/DC converter 5 will be used less, as compared to the figure 1 embodiment.

The FET 11 is normally on, i.e. allows current to pass, and is only shut off when the DC/DC converter 5 is engaged. In its off condition, the FET 11 should be considered as an interruption. The terminology "on" and "off" stem from the FET 11 being used as a switch. The FET 11 should be arranged according to the block diagram, i.e. having the gate thereof controlled by the DC/DC converter 5 and the source connected to the battery 2 side and the drain connected to the load 3 side. The diode 4 is retained as an extra precaution, as it provides redundancy should the FET 11 break down or malfunction.

Thus, in accordance with the third embodiment of figure 3, the arrangement comprises all features described in conjunction with the figure 1 embodiment and further comprises a FET 11 arranged in parallel with the diode 4 such that the gate of the FET 11 is controlled by the DC/DC converter 5 to allow current to pass from the battery 2 side to the load 3 side when the DC/DC converter 5 is not engaged and prevent current from passing when the DC/DC converter 5 is engaged.

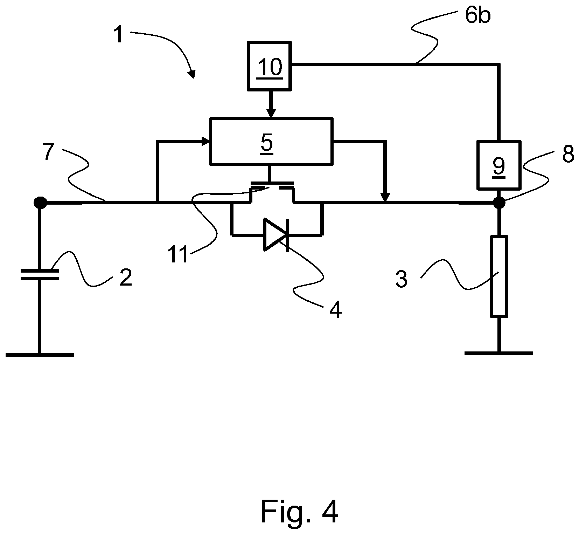

In figure 4 is shown a block diagram schematically illustrating the arrangement for voltage protection of an electrical load 3 in a motor vehicle according to a fourth alternative embodiment of the present invention.

The figure 4 embodiment corresponds essentially to the figure 2 embodiment, although even if the diode 4 is provided in order to prevent current from travelling backwards, diodes, unfortunately, are not ideal, why losses will occur due to the resistance of the diode 4. Thus, in order to avoid such losses it is possible, as provided for in the figure 3 embodiment, to make use of a field-effect-transistor (FET) 11 and control it to have similar characteristics to a diode, i.e. only allowing current to travel in one direction. Such an arrangement promotes the reduction of losses further as the DC/DC converter 5 will be used less, as compared to the figure 2 embodiment.

The FET 11 is normally on, i.e. allows current to pass, and is only shut off when the DC/DC converter 5 is engaged. In its off condition, the FET 11 should be considered as an interruption. The terminology "on" and "off" stem from the FET 11 being used as a switch. The FET 11 should be arranged according to the block diagram, i.e. having the gate thereof controlled by the DC/DC converter 5 and the source connected to the battery 2 side and the drain connected to the load 3 side. The diode 4 is retained as an extra precaution, as it provides redundancy should the FET 11 break down or malfunction.

Thus, in accordance with the third embodiment of figure 4, the arrangement comprises all features described in conjunction with the figure 2 embodiment and further comprises a FET 11 arranged in parallel with the diode 4 such that the gate of the FET 11 is controlled by the DC/DC converter 5 to allow current to pass from the battery 2 side to the load 3 side when the DC/DC converter 5 is not engaged and prevent current from passing when the DC/DC converter 5 is engaged.

Further, the present invention also relates to an automotive vehicle, which comprises arrangement for voltage protection of an electrical load 3 in a motor vehicle as described above.

As stated above the present invention also relates to a method for voltage protection of an electrical load 3 in a motor vehicle. The method comprises the steps of: arranging a DC/DC converter 5 to receive as a control signal the voltage level on an electrical load 3 to be protected and arranging the DC/DC converter 5 in a feed line 7 to the electrical load 3 to be protected in parallel with a diode 4 such that a battery 2 voltage of the vehicle is feed to an input of the DC/DC converter 5 and to the anode of the diode 4 and such that the electrical load 3 to be protected is fed from the output of the DC/DC converter 5 and the cathode side of the diode 4.

In accordance with a first embodiment of the present invention, as illustrated in figure 1, the method further comprises the step of arranging a dedicated wire 6a for sensing the voltage at the sensitive load 3 and feeding the control signal to the DC/DC.

In accordance with a second embodiment of the present invention, as illustrated in figure 2, the method further comprises the steps of: arranging a dedicated voltage sensing arrangement 9 for sensing and transmitting the voltage at the sensitive load 3, and arranging a means 6b for transferring information between vehicle systems to transfer the transmitted voltage at the sensitive load 3; and arranging a dedicated feedback input arrangement 10 to receive the voltage at the sensitive load 3 transmitted by the dedicated voltage sensing arrangement 9 over the means 6b for transferring information between vehicle systems and provide the voltage at the sensitive load 3 as a feedback input to the DC/DC converter 5.

In this second embodiment the method may further comprise arranging as the means 6b for transferring information between vehicle systems a controller-area network bus or similar.

Still further, the method may comprise arranging a FET 11 in parallel with the diode 4 such that the gate of the FET 11 is controlled by the DC/DC converter 5 to allow current to pass from the battery 2 side to the load 3 side when the DC/DC converter 5 is not engaged and prevent current from passing when the DC/DC converter 5 is engaged.

The invention is not limited to the above-described embodiments, but may be varied within the scope of the following claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method for voltage protection of an electrical load (3) in a motor vehicle, **characterized in that** it comprises the steps of:
arranging a DC/DC converter (5) to receive as a control signal the voltage level on an electrical load (3) to be protected and arranging the DC/DC converter (5) in a feed line (7) to the electrical load (3) to be protected in parallel with a diode (4) such that a battery (2) voltage of the vehicle is feed to an input of the DC/DC converter (5) and to the anode of the diode (4) and such that the electrical load (3) to be protected is fed from the output of the DC/DC converter (5) and the cathode side of the diode (4).

2. A method according to claim 1, **characterized in that** it further comprises the step of arranging a dedicated wire (6a) for sensing the voltage at the sensitive load (3) and feeding the control signal to the DC/DC.

3. A method according to claim 1, **characterized in that** it further comprises the steps of:
arranging a dedicated voltage sensing arrangement (9) for sensing and transmitting the voltage at the sensitive load (3), and
arranging a means (6b) for transferring information between vehicle systems to transfer the transmitted voltage at the sensitive load (3); and
arranging a dedicated feedback input arrangement (10) to receive the voltage at the sensitive load (3) transmitted by the dedicated voltage sensing arrangement (9) over the means (6b) for transferring information between vehicle systems and provide the voltage at the sensitive load (3) as a feedback input to the DC/DC converter (5).

4. A method according to claim 3, **characterized in that** it further comprises arranging as the means (6b) for transferring information between vehicle systems a controller-area network bus or similar.

5. A method according to any one of claims 1 to 4, **characterized in that** it further comprises arranging a field-effect-transistor (11) in parallel with the diode (4) such that the gate of the field-effect-transistor (11) is controlled by the DC/DC converter (5) to allow current to pass from the battery (2) side to the load (3) side when the DC/DC converter (5) is not engaged and prevent current from passing when the DC/DC converter (5) is engaged.

6. An arrangement (1) for voltage protection of an electrical load (3) in a motor vehicle, **characterized in that** it comprises a DC/DC converter (5) arranged to receive as a control signal the voltage level on an electrical load (3) to be protected where the DC/DC converter (5) is arranged in a feed line (7) to the electrical load (3) to be protected in parallel with a diode (4) such that a battery (2) voltage of the vehicle is feed to an input of the DC/DC converter (5) and to the anode of the diode (4) and such that the electrical load (3) to be protected is fed from the output of the DC/DC converter (5) and the cathode side of the diode (4).

7. An arrangement (1) according to claim 6, **characterized in that** it further comprises a dedicated wire (6a) for sensing the voltage at the sensitive load (3) and feeding the control signal to the DC/DC.

8. An arrangement (1) according to claim 6, **characterized in that** it further comprises:
a dedicated voltage sensing arrangement (9) arranged to sense and transmit the voltage at the sensitive load (3), and
a means (6b) for transferring information between vehicle systems arranged to transfer the transmitted voltage at the sensitive load (3); and
a dedicated feedback input arrangement (10) arranged to receive the voltage at the sensitive load (3) transmitted by the dedicated voltage sensing arrangement (9) over the means (6b) for transferring information between vehicle systems and provide the voltage at the sensitive load (3) as a feedback input to the DC/DC converter (5).

9. An arrangement (1) according to claim 6, **characterized in that** the means (6b) for transferring information between vehicle systems is a controller-area network bus or similar.

10. An arrangement (1) according to any one of claims 6 to 9, **characterized in that** it further comprises a field-effect-transistor (11) arranged in parallel with the diode (4) such that the gate of the field-effect-transistor (11) is controlled by the DC/DC converter (5) to allow current to pass from the battery (2) side to the load (3) side when the DC/DC converter (5) is not engaged and prevent current from passing when the DC/DC converter (5) is engaged.

11. An automotive vehicle, **characterized in that** it comprises an arrangement (1) for voltage protection of an electrical load (3) in a motor vehicle according to any one of claims 6 to 10.

## Patentansprüche

1. Verfahren für Spannungsschutz einer elektrischen Last (3) in einem Motorfahrzeug,
**dadurch gekennzeichnet, dass** es die folgenden Schritte umfasst:
Anordnen eines Gleichstrom/Gleichstrom-Wandlers (5) zum Empfangen, als ein Steuersignal, des Spannungspegels an einer elektrischen Last (3), die zu schützen ist, und Anordnen des Gleichstrom/Gleichstrom-Wandlers (5) in einer Zuführungsleitung (7) zu der elektrischen Last (3), die zu schützen ist, parallel mit einer Diode (4) derart, dass eine Spannung einer Batterie (2) des Fahrzeugs einem Eingang des Gleichstrom/Gleichstrom-Wandlers (5) und der Anode der Diode (4) zugeführt wird, und derart, dass die elektrische Last (3), die zu schützen ist, aus dem Ausgang des Gleichstrom/Gleichstrom-Wandlers (5) und der Kathodenseite der Diode (4) zugeführt wird.

2. Verfahren nach Anspruch 1, **dadurch gekennzeichnet, dass** es ferner den Schritt des Anordnens eines dedizierten Drahts (6a) zum Erfassen der Spannung an der empfindlichen Last (3) und des Zuführens des Steuersignals zu dem Gleichstrom/Gleichstrom umfasst.

3. Verfahren nach Anspruch 1, **dadurch gekennzeichnet, dass** es ferner die folgenden Schritte umfasst:
Anordnen einer dedizierten Spannungserfassungsanordnung (9) zum Erfassen und Übertragen der Spannung an der empfindlichen Last (3) und
Anordnen eines Mittels (6b) zum Transferieren von Informationen zwischen Fahrzeugsystemen, um die übertragene Spannung an der empfindlichen Last (3) zu transferieren; und
Anordnen einer dedizierten Rückmeldungseingabeanordnung (10) zum Empfangen der Spannung an der empfindlichen Last (3), übertragen durch die dedizierte Spannungserfassungsanordnung (9) über das Mittel (6b) zum Transferieren von Informationen zwischen Fahrzeugsystemen, und Bereitstellen der Spannung an der empfindlichen Last (3) als eine Rückmeldungseingabe für den Gleichstrom/Gleichstrom-Wandler (5).

4. Verfahren nach Anspruch 3, **dadurch gekennzeichnet, dass** es ferner umfasst, einen Steuerungsbereich-Netzwerkbus oder Ähnliches als das Mittel (6b) zum Transferieren von Informationen zwischen Fahrzeugsystemen anzuordnen.

5. Verfahren nach einem der Ansprüche 1 bis 4, **dadurch gekennzeichnet, dass** es ferner umfasst, einen Feldeffekttransistor (11) parallel mit der Diode (4) derart anzuordnen, dass das Gate des Feldeffekttransistors (11) durch den Gleichstrom/Gleichstrom-Wandler (5) gesteuert wird, zu gestatten, dass Strom von der Seite der Batterie (2) zu der Seite der Last (3) passiert, wenn der Gleichstrom/Gleichstrom-Wandler (5) nicht aktiviert ist, und zu verhindern, dass Strom passiert, wenn der Gleichstrom/Gleichstrom-Wandler (5) aktiviert ist.

6. Anordnung (1) für Spannungsschutz einer elektrischen Last (3) in einem Motorfahrzeug, **dadurch gekennzeichnet, dass** sie einen Gleichstrom/Gleichstrom-Wandler (5) umfasst, angeordnet zum Empfangen, als ein Steuersignal, des Spannungspegels einer elektrischen Last (3), die zu schützen ist, wobei der Gleichstrom/Gleichstrom-Wandler (5) in einer Zuführungsleitung (7) zu der elektrischen Last (3), die zu schützen ist, parallel mit einer Diode (4) derart angeordnet ist, dass eine Spannung einer Batterie (2) des Fahrzeugs einem Eingang des Gleichstrom/Gleichstrom-Wandlers (5) und der Anode der Diode (4) zugeführt wird, und derart, dass die elektrische Last (3), die zu schützen ist, aus dem Ausgang des Gleichstrom/Gleichstrom-Wandlers (5) und der Kathodenseite der Diode (4) zugeführt wird.

7. Anordnung (1) nach Anspruch 6, **dadurch gekennzeichnet, dass** sie ferner einen dedizierten Draht (6a) zum Erfassen der Spannung an der empfindlichen Last (3) und zum Zuführen des Steuersignals zu dem Gleichstrom/Gleichstrom umfasst.

8. Anordnung (1) nach Anspruch 6, **dadurch gekennzeichnet, dass** sie ferner umfasst:
eine dedizierte Spannungserfassungsanordnung (9), angeordnet zum Erfassen und Übertragen der Spannung an der empfindlichen Last (3), und
ein Mittel (6b) zum Transferieren von Informationen zwischen Fahrzeugsystemen, angeordnet zum Transferieren der übertragenen Spannung an der empfindlichen Last (3); und
eine dedizierte Rückmeldungseingabeanordnung (10), angeordnet zum Empfangen der Spannung an der empfindlichen Last (3), übertragen durch die dedizierte Spannungserfassungsanordnung (9) über das Mittel (6b) zum Transferieren von Informationen zwischen Fahrzeugsystemen, und Bereitstellen der Spannung an der empfindlichen Last (3) als eine Rückmeldungseingabe für den Gleichstrom/Gleichstrom-Wandler (5).

9. Anordnung (1) nach Anspruch 6, **dadurch gekennzeichnet, dass** das Mittel (6b) zum Transferieren von Informationen zwischen Fahrzeugsystemen ein Steuerungsbereich-Netzwerkbus oder Ähnliches ist.

10. Anordnung (1) nach einem der Ansprüche 6 bis 9, **dadurch gekennzeichnet, dass** sie ferner einen Feldeffekttransistor (11) umfasst, parallel mit der Diode (4) derart angeordnet, dass das Gate des Feldeffekttransistors (11) durch den Gleichstrom/Gleichstrom-Wandler (5) gesteuert wird, zu gestatten, dass Strom von der Seite der Batterie (2) zu der Seite der Last (3) passiert, wenn der Gleichstrom/Gleichstrom-Wandler (5) nicht aktiviert ist, und zu verhindern, dass Strom passiert, wenn der Gleichstrom/Gleichstrom-Wandler (5) aktiviert ist.

11. Selbstfahrendes Fahrzeug, **dadurch gekennzeichnet, dass** es eine Anordnung (1) für Spannungsschutz einer elektrischen Last (3) in einem Motorfahrzeug nach einem der Ansprüche 6 bis 10 umfasst.

## Revendications

1. Procédé de protection de tension d'une charge électrique (3) dans un véhicule à moteur, **caractérisé en ce qu'**il comprend les étapes consistant à :
agencer un convertisseur C.C./C.C. (5) pour recevoir comme signal de commande le niveau de tension sur une charge électrique (3) à protéger et agencer le convertisseur C.C./C.C. (5) dans une ligne d'alimentation (7) allant à la charge électrique (3) à protéger en parallèle avec une diode (4) de telle sorte qu'une tension de batterie (2) du véhicule soit alimentée à une entrée du convertisseur C.C./C.C. (5) et à l'anode de la diode (4) et de telle sorte que la charge électrique (3) à protéger soit alimentée à partir de la sortie du convertisseur C.C./C.C. (5) et du côté cathode de la diode (4).

2. Procédé selon la revendication 1, **caractérisé en ce qu'**il comprend en outre l'étape consistant à agencer un fil dédié (6a) pour détecter la tension au niveau de la charge sensible (3) et à alimenter le signal de commande au C.C./C.C..

3. Procédé selon la revendication 1, **caractérisé en ce qu'**il comprend en outre les étapes consistant à agencer un agencement de détection de tension dédié (9) pour détecter et transmettre la tension au niveau de la charge sensible (3), et
agencer un moyen (6b) de transfert d'informations entre des systèmes de véhicule pour transférer la tension transmise au niveau de la charge sensible (3) ; et
agencer un agencement d'entrée de rétroaction dédié (10) pour recevoir la tension au niveau de la charge sensible (3) transmise par l'agencement de détection de tension dédié (9) par le biais du moyen (6b) de transfert d'informations entre des systèmes de véhicule et fournir la tension au niveau de la charge sensible (3) comme entrée de rétroaction au convertisseur C.C./C.C. (5).

4. Procédé selon la revendication 3, **caractérisé en ce qu'**il comprend en outre l'agencement comme moyen (6b) de transfert d'informations entre des systèmes de véhicule d'un bus de réseau à zone de contrôleur ou similaire.

5. Procédé selon l'une quelconque des revendications 1 à 4, **caractérisé en ce qu'**il comprend en outre l'agencement d'un transistor à effet de champ (11) en parallèle avec la diode (4) de telle sorte que la grille du transistor à effet de champ (11) soit commandée par le convertisseur C.C./C.C. (5) pour permettre le passage de courant depuis le côté batterie (2) jusqu'au côté charge (3) quand le convertisseur C.C./C.C. (5) n'est pas enclenché et empêcher le passage de courant quand le convertisseur C.C./C.C. (5) est enclenché.

6. Agencement (1) de protection de tension d'une charge électrique (3) dans un véhicule à moteur, **caractérisé en ce qu'**il comprend un convertisseur C.C./C.C. (5) agencé pour recevoir comme signal de commande le niveau de tension sur une charge électrique (3) à protéger dans lequel le convertisseur C.C./C.C. (5) est agencé dans une ligne d'alimentation (7) allant à la charge électrique (3) à protéger en parallèle avec une diode (4) de telle sorte qu'une tension de batterie (2) du véhicule soit alimentée à une entrée du convertisseur C.C./C.C. (5) et à l'anode de la diode (4) et de telle sorte que la charge électrique (3) à protéger soit alimentée à partir de la sortie du convertisseur C.C./C.C. (5) et du côté cathode de la diode (4).

7. Agencement (1) selon la revendication 6, **caractérisé en ce qu'**il comprend en outre un fil dédié (6a) pour détecter la tension au niveau de la charge sensible (3) et alimenter le signal de commande au C.C./C.C..

8. Agencement (1) selon la revendication 6, **caractérisé en ce qu'**il comprend en outre :
un agencement de détection de tension dédié (9) agencé pour détecter et transmettre la tension au niveau de la charge sensible (3), et
un moyen (6b) de transfert d'informations entre des systèmes de véhicule agencé pour transférer la tension transmise au niveau de la charge sensible (3) ; et
un agencement d'entrée de rétroaction dédié (10) agencé pour recevoir la tension au niveau de la charge sensible (3) transmise par l'agencement de détection de tension dédié (9) par le biais du moyen (6b) de transfert d'informations entre des systèmes de véhicule et fournir la tension au niveau de la charge sensible (3) comme entrée de rétroaction au convertisseur C.C./C.C. (5).

9. Agencement (1) selon la revendication 6, **caractérisé en ce que** le moyen (6b) de transfert d'informations entre des systèmes de véhicule est un bus de réseau à zone de contrôleur ou similaire.

10. Agencement (1) selon l'une quelconque des revendications 6 à 9, **caractérisé en ce qu'**il comprend en outre un transistor à effet de champ (11) agencé en parallèle avec la diode (4) de telle sorte que la grille du transistor à effet de champ (11) soit commandée par le convertisseur C.C./C.C. (5) pour permettre le passage de courant depuis le côté batterie (2) jusqu'au côté charge (3) quand le convertisseur C.C./C.C. (5) n'est pas enclenché et empêcher le passage de courant quand le convertisseur C.C./C.C. (5) est enclenché.

11. Véhicule automobile, **caractérisé en ce qu'**il comprend un agencement (1) de protection de tension d'une charge électrique (3) dans un véhicule à moteur selon l'une quelconque des revendications 6 à 10.
